# EUROPEAN PATENT SPECIFICATION

(11) **EP 2 944 492 B1**
(45) Date of publication and mention of the grant of the patent: **11.09.2019**
(21) Application number: 14168276.5
(22) Date of filing: 14.05.2014
(51) Int. Cl.: B60J 10/16, B60J 10/18, B60J 10/265, B60J 10/30, B60J 10/88

(54) **A glass run seal for a movable pane in a vehicle window aperture.**
Dichtung für eine bewegliche KFZ-Fensterscheibe
Joint d'étanchéité pour une vitre mobile de véhicule

(43) Date of publication of application: 18.11.2015
(73) Proprietor: Volvo Car Corporation, 40531 Göteborg (SE)
(72) Inventor: Jonsson, Mats, 417 53 Göteborg (SE)
(74) Representative: Kransell & Wennborg KB

(56) References cited:
- EP-A1- 0 638 463
- EP-A1- 2 594 421
- DE-B3-102006 060 390
- DE-U1-202009 005 632
- US-A1- 2013 305 612

## Description

### TECHNICAL FIELD

The invention relates to a glass run seal assembly for automotive vehicles. More particularly, the present invention relates to a glass run seal assembly comprising extruded thermoplastic polymeric structural materials, thermoplastic polymer and an integral reinforcement.

### BACKGROUND

Vehicle glass run seals are used in automotive vehicles to support a window pane while allowing the window pane to move between an open and a closed position. The glass run seal guides and supports the window pane and forms a seal between the window pane and the vehicle door or body structure. The glass run seal protects the passenger compartment from the elements, holds the window pane in position to prevent movement other than in an intended translational direction while allowing window pane translational movement without significant resistance.

Automotive window openings often have a shape which can cause problems for the design and manufacture of a glass run seal. Problems to be solved relate to the provision of a glass run seal which can be easily installed during manufacture of the vehicle to extend along the sides and top of the window opening while also meeting the requirements for support and guiding as described above. One example of a glass run seal design has a metallic core with a generally S-shaped cross-section which is covered by suitable elastomeric material. The S-shape provides one channel facing in a first direction for clamping attachment to a door flange for attaching the channel and a second channel facing in a second direction for guiding and supporting a glass pane. A problem with an S-shaped metallic core is that the S-shape is so stiff that it is difficult to bend to follow the curvature along the upper portion (header) of the window opening. A further problem is that the elastomeric material may wrinkle locally when bent to the required curvature.

GB 2 093 407 describes a method of forming a permanent curve in a reinforced strip of plastics material, wherein an L-shaped core of a thermoplastic resin forms a reinforcing strip. The method comprises the steps of heating a section of the strip until pliable, stretching the section round a curved forming jig, and maintaining the section under tension round the forming jig until the section has cooled to a non-pliable state. A problem with this solution is that it requires further working of the strip after the extrusion process. This involves additional heating, stretching and bending of a local portion of the strip, which can cause localized changes in material properties and dimensional variations for the strip. Document DE 20 2009 005 632 U1 discloses a further glass run seal assembly.

The object of the invention is to provide an improved glass run seal and a manufacturing method which solves the above problems relating to resistance to bending and wrinkling of a glass run seal.

### SUMMARY

The above problems have been solved by a glass run seal assembly and a manufacturing method as claimed in the appended claims.

The invention relates to a glass run seal assembly for a movable pane in a vehicle window aperture, in particular to a glass run seal assembly having at least one curved section. The glass run seal assembly can typically be arranged in a vehicle window aperture along a vehicle front door, adjacent a front A-pillar, along a vehicle rear door, adjacent a rear C-pillar in a sedan or saloon type vehicle, or extend along the window apertures of both a front and rear door. The glass run seal assembly comprises a first portion having a generally U-shaped cross section defining a glass run channel. The U-shaped glass run channel has first and second legs with edges joined by a base web, wherein at least the legs of the first portion comprises elastomeric extrusions bonded to the base web. The base web comprises a thermoplastic polymeric structural material. The first and second legs of the glass run channel are preferably each provided with one or more sealing lips, extending from the respective leg into the open U-shaped glass run channel along the longitudinal extension of the glass run seal assembly. The sealing lips are contacted and/or displaced by a pane moving into the glass run channel to close the window aperture.

The glass run seal assembly further comprises a second portion having a generally U-shaped cross section, defining an attachment channel. The attachment channel has a first and a second leg with edges joined by a base web. The legs and the base web of the second portion comprise a thermoplastic polymeric structural material. The first leg of the second portion has an edge remote from its base web, which edge is integral with the base web of the first portion. In this way, the glass run channel and the attachment channel are connected to form a glass run seal assembly.

The second leg of the second portion, forming part of the attachment channel, comprises a reinforcement extending within the second leg in the longitudinal extension thereof and providing structural support for at least one curved section of the glass run seal assembly. Preferably, the second leg of the second portion with the reinforcement has a lower coefficient of thermal expansion than the first leg of the second portion.

According to one example, the reinforcement is arranged so that a cross-section through the reinforcement has a major extension in a plane located at right angles to the main direction of the U-shaped opening into the glass run channel. Consequently, the reinforcement has a major extension in a plane located at right angles to the plane of the portion of a pane to be located in the glass run channel at that cross-section. The main direction of the U-shaped opening into the glass run channel will correspond with a line at right angles to a tangent to the curved glass run seal assembly at each point along a curved section of the assembly.

According to a further example, a central axis between the first and second legs in a cross-section of the U-shaped opening that extends into and forms the glass run channel can be arranged to intersect the reinforcement integrated in the second leg of the second portion.

The reinforcement preferably, but not necessarily, comprises a metal core. According to one example the metal core comprises at least one metal strip. In the case of a single metal strip, a cross-section of the strip can have a width within the range 2-8 mm and a thickness within the range 0.1-1 mm and can comprise a suitable metal such as copper, aluminium or an aluminium alloy. Alternatively, the reinforcement can comprise two or more metal strips arranged side by side. The dimensions of multiple strips are chosen to provide the same mechanical properties as for a single strip.

According to a further alternative the reinforcement can comprise multiple parallel, intertwined or woven metal wires or threads/fibres of a suitable plastic material, such as glass fibre, to provide the second leg of the second portion with the desired properties relating to the coefficient of thermal expansion.

The legs and the base web of the second portion and the base web of the first portion comprise a thermoplastic polymeric structural material. A suitable material for this purpose is a structural grade polypropylene (PP). As these portions are formed by extrusion, the reinforcement should have an outer surface having suitable properties for achieving good adhesion with the thermoplastic polymeric structural material. Such adhesive properties can be provided by the material making up the reinforcement, a suitable surface treatment thereof, or by a coating applied to the material.

The legs of the first portion comprises elastomeric extrusions co-extruded with and bonded to their base web to form a glass run channel. The first and second legs of the first portion comprises thermoplastic vulcanizates (TPV), also termed elastomeric alloys (EA) or dynamically vulcanized thermoplastic elastomers (TPE). The first and second legs first of the first portion and the sealing lips are co-extruded with and bonded to the legs and comprises the same or similar materials. Preferably, sealing lips can comprise a softer grade of material to allow them to conform to the shape of the movable pane. This will be described in further detail below.

A reinforcement as described above is arranged to extend within at least one longitudinal section of the second leg where the glass run seal assembly has a curvature. As indicated above, at least one reinforcement is arranged to extend within the second leg in the longitudinal extension thereof to provide structural support for a corresponding curved section of the glass run seal assembly. Hence, the reinforcement is not arranged throughout the entire length of the glass run assembly. A reinforcement is only required adjacent curved sections of the assembly where it is desired to prevent bulges or wrinkles along a curved section of the glass run seal assembly.

The examples listed above are not mutually excluding embodiments, but can be combined freely within the scope of the invention.

The invention further relates to a method for manufacturing a glass run seal assembly. The method involves performing the steps of:
- extruding an elastomeric material forming individual first and second legs for a first portion intended to form a glass run channel;
- simultaneously extruding a thermoplastic material forming a second portion having a generally U-shaped cross section defining an attachment channel, the second portion having first and second legs with edges joined by a base web, and a base web bonding with the extruded elastomeric material of the first and second legs of the first portion to form a generally U-shaped cross section defining the glass run channel, the base web being integral with an edge of the first leg of the second portion;
- inserting a reinforcement into the second leg of the second portion at predetermined locations during extrusion of the thermoplastic material, wherein the co-extruded materials form a glass run seal assembly; and
- cooling the glass run seal assembly and allowing the first leg of the second portion and the extruded first and second legs of the first portion to shrink in the longitudinal direction relative to the reinforced second leg of the second portion, forming a glass run seal assembly having a predetermined curvature.

The method can further involve inserting the reinforcement so that a cross-section through the reinforcement has a major extension in a plane located at right angles to the main direction of the U-shaped opening into the glass run channel. In addition insertion of the reinforcement can be performed so that the central axis of, or plane through, the U-shaped opening into the glass run channel is arranged to intersect the reinforcement.

The method preferably involves using a reinforcement comprising at least one metal strip. Alternative types of reinforcements and suitable materials have been listed above.

As described above, the reinforcement is inserted into the second leg of the second portion at predetermined locations during extrusion of the glass run seal assembly. In this way a reinforcement is arranged to extend within at least one longitudinal section of the second leg where the glass run seal assembly will require a curvature following the shape of a vehicle window aperture. The reinforcing insert is located within a section of the glass run seal assembly comprising a thermoplastic polymeric structural material, such as structural polypropylene (PP). The glass run seal assembly is hot and malleable after the extrusion process. During cooling the reinforcement prevents the thermoplastic polymeric structural material in the second leg of the second portion from shrinking. At the same time, the thermoplastic polymeric structural material in the first leg of the second portion and the elastomeric material are allowed to shrink during cooling. As the second leg of the second portion with the reinforcement has a lower coefficient of thermal expansion than the first leg of the second portion the glass run seal assembly will bend to form a curvature without wrinkles. The glass run seal assembly will bend in a plane located at right angles to the major extension of a cross-section through the reinforcement.

According to a preferred example, the invention relates to a glass run seal assembly comprising a metal insert, such as an aluminium strip, that prevents the assembly from wrinkling during cooling and subsequent mounting onto a curved section the window opening of a vehicle door.

The above method describes the basic structural sections of a glass run seal assembly according to the invention, which sections comprise an attachment channel with a reinforcement and a glass run channel. However, the extrusion process can involve additional component parts being co-extruded with their respective basic structural section.

During the extrusion process the a glass run channel can be provided with sealing lips extending into the generally U-shaped cross section, in order to contact and seal a portion along the upper part of a glass pane. Similarly, the attachment channel can be provided with sealing lips extending away from its generally U-shaped cross section, in order to contact the vehicle chassis and seal a gap between an upper portion of the door and a corresponding section forming the upper portion of a door opening. Sealing lips of this type can be made from an elastomeric material of the same type used for the first and second legs for the first portion of the glass run channel. As the sealing lips need to be able to be deformed to conform to cooperating surfaces, the elastomeric material used is preferably a softer grade than used for the glass run channel.

### BRIEF DESCRIPTION OF THE DRAWINGS

The objects and advantages of the present invention will be described in further detail in the following description and appended claims with reference to the attached schematic drawings in which:
- Figure 1: shows a glass run seal assembly according to the invention mounted to a vehicle;
- Figure 2: shows a glass run seal assembly according to the invention with a set of seals and guides for a vehicle door;
- Figure 3: shows a cross-section through a glass run seal assembly according to the invention mounted onto a header of a vehicle door;
- Figure 4: shows a cross-section through a glass run seal assembly as shown in Figure 2;
- Figure 5: shows a schematic diagram for a method of manufacturing a glass run seal assembly according to the invention.

### DETAILED DESCRIPTION

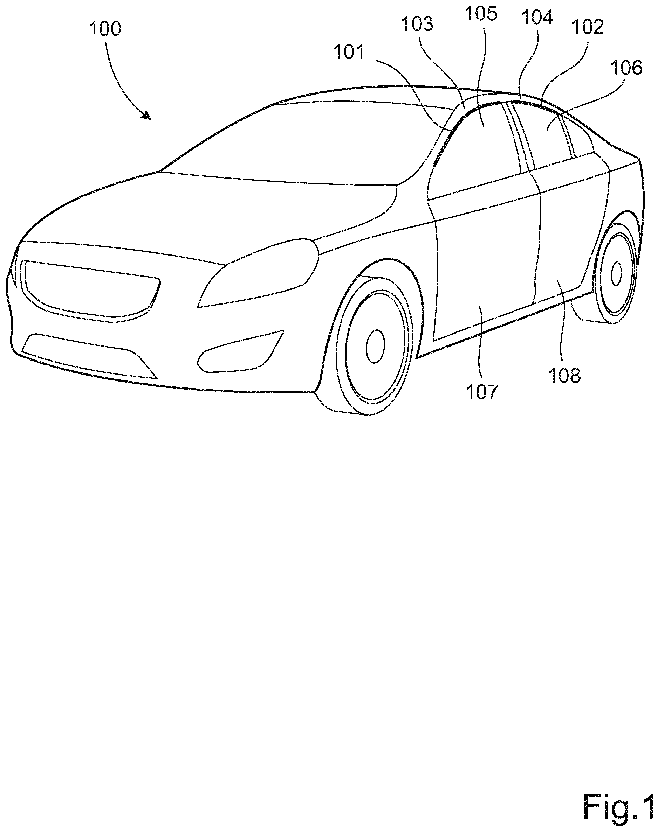

Figure 1 shows glass run seal assemblies 101, 102 according to the invention mounted to a vehicle 100. The figure shows a first glass run seal assembly 101 mounted on the header 103 of the window aperture 105 of a front door 107, and a second glass run seal assembly 102 mounted on the header 104 of the window aperture 106 of a rear door 108.

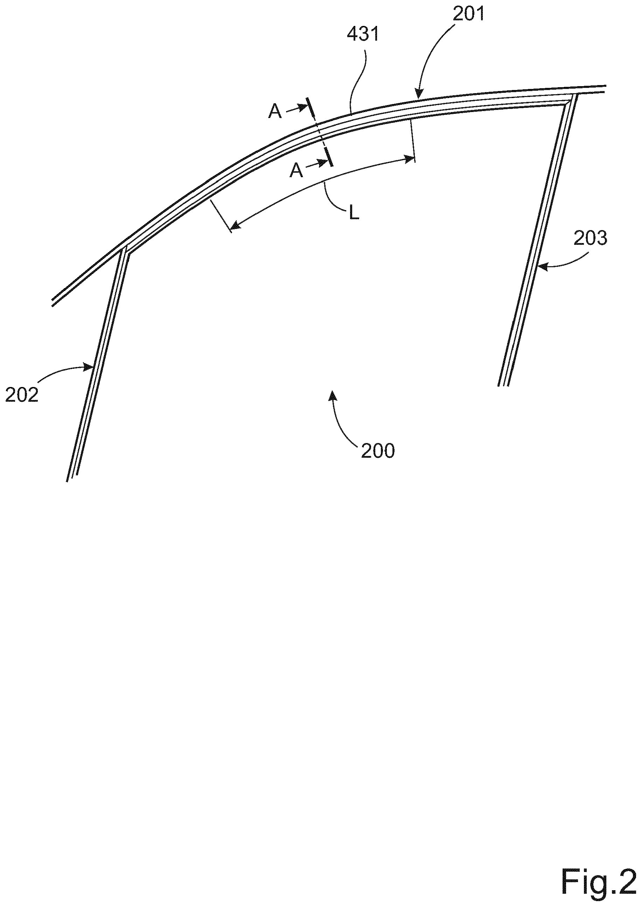

Figure 2 shows a window aperture seal assembly 200 according to the invention with a complete set of seals and guides for a vehicle door, in this example a front door 107, as shown in Figure 1. Such a set of seals and guides includes, for instance, a glass run seal assembly 201 for a header 103 (Figure 1) and vertical glass run guides 202, 203 for the front and rear portions of a glass pane (not shown). In addition, an additional seal (not shown) is provided for the lower portion of the window aperture 105 (Figure 1).

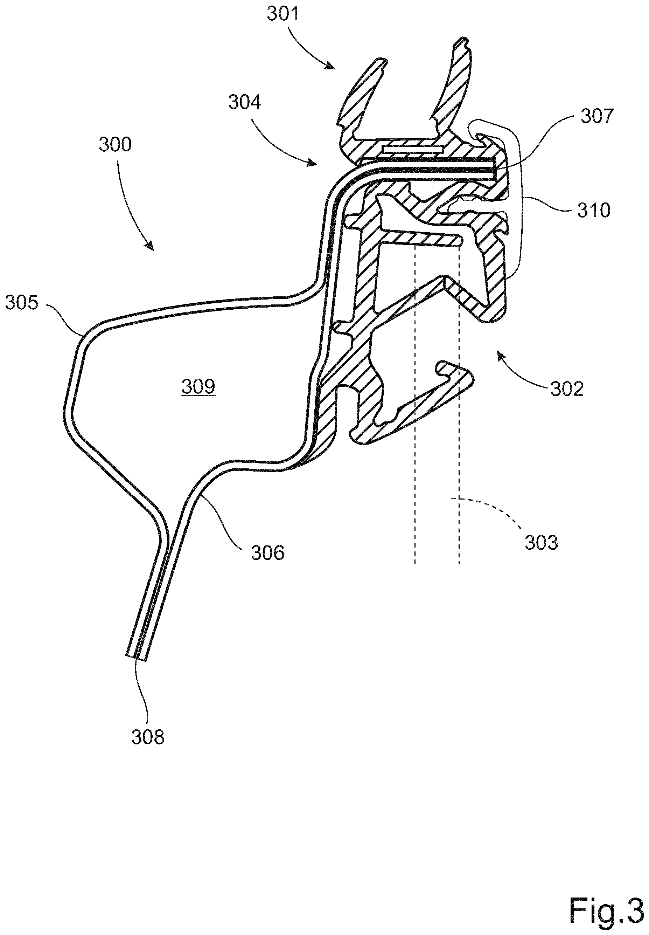

Figure 3 shows a cross-section A-A through a glass run seal assembly 301 according to the invention mounted onto a header 300 a vehicle door. The cross-section A-A is taken at a curved portion of the glass run seal assembly 301, indicated by reference 201 in Figure 2. The glass run seal assembly 301 comprises a first portion 302 having a generally U-shaped cross section defining a glass run channel. When the vehicle window is closed, a glass pane 303 is arranged to extend upwards into the glass run channel 302, as indicated with dashed lines. The glass run seal 301 assembly further comprises a second portion 304 having a generally U-shaped cross section, defining an attachment channel. The header 300 shown in Figure 3 is made up of two profiled sheet metal components 305, 306 welded together along a first and a second edge portion 307, 308, for instance by spot welding, to form a closed section 309. The first edge portion 307 formed by the assembled sheet metal components 305, 306 is used for attaching the glass run seal assembly 301. The glass run seal assembly 301 is retained in position by means of cooperating projections and recesses (not shown) on the first edge portion 307 and the attachment channel 304, respectively.

An optional metal trim 310 having the same curvature as the glass run seal assembly can be arranged to cover at least a part of the outer surfaces of the first and second portions 302, 304. In thie example shown in Figure 3, the metal trim 310 is T-shaped, wherein its stem is retained in a recess between the first and second portions 302, 304.

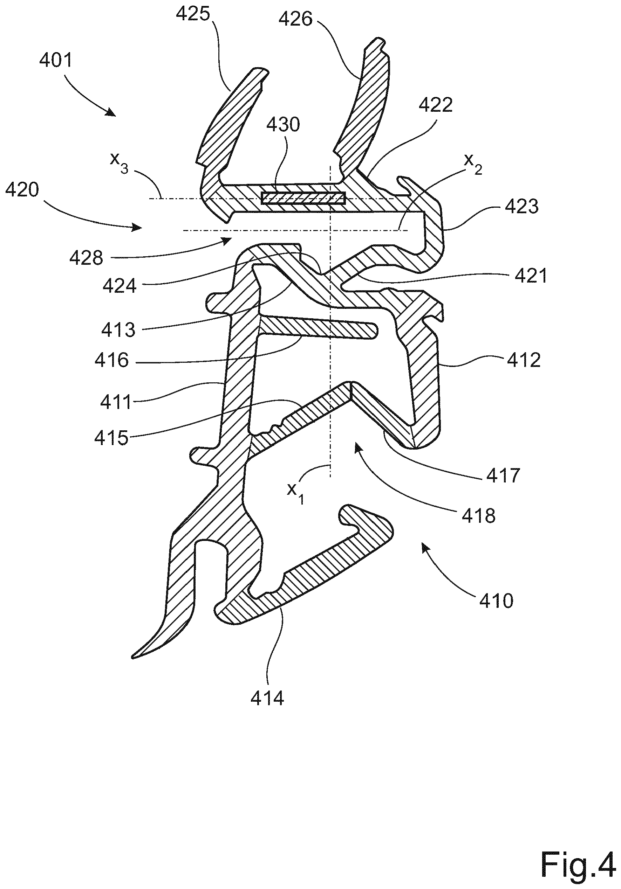

Figure 4 shows a cross-section A-A (see Figure 2) through a glass run seal assembly 401 as schematically shown in Figures 2 and 3. The glass run seal assembly 401 comprises a first portion 410 having a generally U-shaped cross section defining a glass run channel 410. The U-shaped glass run channel 410 has first and second legs 411, 412 with edges joined by a first base web 413, wherein the first and second legs 411, 412 of the first portion 410 comprises an extruded elastomeric material bonded to the base web 413, which base web comprises an extruded thermoplastic polymeric structural material. The first and second legs 411, 412 of the glass run channel 410 are each provided with sealing lips 414, 415, 416, 417, extending from the respective leg into the open U-shaped glass run channel 410 along the longitudinal extension of the glass run seal assembly 401. The sealing lips 414, 415, 416, 417 comprise an extruded elastomeric material bonded to their respective first and second legs 411, 412. Preferably, the elastomeric material of the sealing lips 414, 415, 416, 417 is relatively softer that the elastomeric material of the first and second legs 411, 412.

In the example shown in Figure 4, the first leg 411 forms an inner part of the glass run channel 410 and the second leg 412 forms an outer part of the glass run channel 410. The inner, first leg 411 comprises a first and a second sealing lip 414, 415 extending upwards at an angle into the U-shaped channel and are arranged to contact and seal against the inner surface of a pane located in the glass run channel 410. The first leg 411 further comprises an upper sealing lips 416 extending into the U-shaped channel substantially at right angles to the first leg 411. The upper sealing lip 416 is arranged to contact and seal against the upper edge of a pane located in the glass run channel 410. The outer, second leg 412 comprises a sealing lip 417 extending upwards at an angle into the U-shaped channel opposite the second sealing lip 415 of the first leg 411. The sealing lip 417 is arranged to contact and seal against the outer surface of a pane located in the glass run channel 410. As indicated above, the sealing lips 414, 415, 416, 417 are contacted and/or displaced by a pane 303 (Figure 3) moving into the glass run channel 410 to close the window aperture 105 (Figure 1).

The glass run seal assembly 401 further comprises a second portion 420 having a generally U-shaped cross section, defining an attachment channel 420. The attachment channel 420 has a first and a second leg 421, 422 with edges joined by a second base web 423. The legs 421, 422 and the base web 423 of the attachment channel 420 comprise an extruded thermoplastic polymeric structural material. The first leg 421 of the attachment channel 420 has an edge 424 remote from its base web 423, which edge 424 is bonded to and integral with the base web 413 of the glass run channel 410. In this way, the glass run channel 410 and the attachment channel 420 are connected to form a glass run seal assembly. Further, the base web 423 of the attachment channel 420 forms an outer surface extending substantially flush with the second leg 412 of the glass run channel 410. The first leg 421 extends inwards, away from the outer surfaces of the attachment channel 420 and the glass run channel 410 towards the base web 413 of the glass run channel 410. The second leg 422 forms an upper part of the attachment channel 420 and extends inwards substantially parallel to a corresponding portion of a door opening in the chassis (not shown). The upper, second leg 422 comprises a first and a second sealing lip 425, 426 extending upwards away from the U-shaped attachment channel 420. The first and second sealing lips 425, 426 are arranged to contact and seal against the door opening above the attachment channel 420.

The second leg 422 of the attachment channel 420 comprises a reinforcement 430 extending within the second leg 422 in the longitudinal extension thereof. The reinforcement 430 provides structural support a locally curved section 431 (see Figure 2) of the glass run seal assembly. In addition, the second leg 422 of the attachment channel 420 with the reinforcement 430 has a lower coefficient of thermal expansion than the first leg 421 of the attachment channel 420. In Figure 4, a first plane X₁ is located at the central axis of, and in the main direction of, the U-shaped opening 418 into the glass run channel 410. A second plane X₂ is located at the central axis of, and in the main direction of, the U-shaped opening 428 into the attachment channel 420.

As shown in Figure 4, the reinforcement 430 is arranged so that a cross-section (section A-A; Figure 2) through the reinforcement 430 has a major extension in a third plane X₃ located at right angles to the first plane X₁ in the main direction of the U-shaped opening 418 into the glass run channel 410. Consequently, the reinforcement 430 has a major extension in a plane X₃ located at right angles to the plane of an upper portion of a pane (not shown) to be located in the opening 418 of the glass run channel 410 at that cross-section. The main direction of the U-shaped opening 418 into the glass run channel will coincide with a line R at right angles to a tangent T to the glass run seal assembly at each point along a curved section of the assembly (shown for section A-A in Figure 2). In the example shown in Figure 4, the plane X₃ through the major extension of the reinforcement 430 is parallel to the central plane X₂ into the opening 428 of the attachment channel 420. In the example shown in Figure 4, the first plane X₁ of the U-shaped opening 418 extending into the glass run channel 410 is also arranged to intersect the reinforcement 430 in the second leg 422 of the attachment channel 420. This arrangement of the reinforcement 430 allows the glass run seal assembly 401 to form a curve in a plane at right angles to the major extension of the reinforcement 430.

The reinforcement 430 preferably, but not necessarily, comprises a metal core. According to one example the metal core comprises at least one metal strip. In the case of a single metal strip, as shown in Figure 4, a cross-section of the strip can have a major extension, or width, within the range 2-8 mm and a minor extension, or thickness, within the range 0.1-1 mm and comprises a metal such as copper, aluminium or an aluminium alloy. Alternatively, the reinforcement can comprise two or more metal strips arranged side by side. The dimensions of multiple strips are chosen to provide the same mechanical properties as for a single strip.

According to a further alternative the reinforcement can comprise multiple parallel, intertwined or woven metal wires or threads/fibres of a suitable plastic material, such as glass fibre. As in the above examples, the reinforcement has major extension, or width, and a minor extension, or thickness, in order to provide the second leg of the attachment channel with the desired properties relating to the coefficient of thermal expansion.

A reinforcement 430 as described above is arranged to extend within at least one longitudinal section of the attachment channel 420 where the glass run seal assembly 401 has a curvature. As indicated above, at least one reinforcement 430 is arranged to extend within the second leg 422 of the attachment channel 420 in the longitudinal extension thereof to provide structural support for a corresponding curved section of the glass run seal assembly 401. Hence, the reinforcement is not arranged throughout the entire length of the glass run assembly. A reinforcement 430 is only required adjacent a length L of a curved section of the assembly 401, as shown in Figure 2, where it is desired to prevent bulges or wrinkles along a curved section of the glass run seal assembly 401.

The first and second legs 421, 422 and the base web 423 of the attachment channel 420 and the base web 413 of the glass run channel 410 comprise a thermoplastic polymeric structural material. A suitable material for this purpose is a structural grade polypropylene (PP). As all portions of the glass run seal assembly 401 are formed by simultaneous co-extrusion, the reinforcement 430 should have an outer surface having suitable properties for achieving good adhesion with the thermoplastic polymeric structural material. Such adhesive properties can be provided by the material making up the reinforcement itself, a suitable surface treatment thereof, or by a coating applied to the material.

The first and second legs 411, 412 of the glass run channel 410 comprises elastomeric extrusions co-extruded with and bonded to their base web 413 to form a U-shaped glass run channel 410. The first and second legs 411, 412 of the glass run channel 410 comprises thermoplastic vulcanizates (TPV), also termed elastomeric alloys (EA) or dynamically vulcanized thermoplastic elastomers (TPE). The first and second legs 411, 412 of the glass run channel 410 and their sealing lips 414, 415, 416, 417 are co-extruded and bonded to each other and comprises the same or similar materials. Similarly, the first and second legs 421, 422 of the attachment channel 420 and their sealing lips 425, 426 are co-extruded and bonded to each other. Preferably, the sealing lips 414, 415, 416, 417, 425, 426 comprise a softer grade of material to allow them to conform to the shape of the movable pane or other contacting portions.

The attachment channel 420 is formed of a polymeric material, and preferably a polymeric material having sufficient rigidity to perform the intended functions. A material that has been found suitable is a structural grade polypropylene. It is understood that comparably rigid thermoset materials can be employed. However, use of thermoset materials requires additional processing steps for recycling of the thermoset materials. In contrast, thermoplastic materials can be readily re-melted and reconfigured into subsequent products.

The attachment channel 420 can be formed from a number of alternative plastic materials, for example, thermoplastics and thermoplastic elastomers (TPE). Depending on the hardness, TPE:s are sometimes categorized as thermoplastics and sometimes as elastomers. For purposes of this invention, no such distinction will be made, and hard and soft grades of plastic will all be referred to as TPE:s. TPE:s are commercially available in several different brands and types. Each type can be obtained in different grades having different properties such as hardness, tensile strength, compression, elongation, thermal stability and colorability. Selection of the appropriate TPE for a particular application depends on a suitable combination for such properties. Types of TPE that are particularly useful are styrenic block co-polymers, rubber polyolefin blends, elastomeric alloys, thermoplastic alloys, thermoplastic elastomeric alloys, thermoplastic isomers, thermoplastic polyurethanes, polyvinyl chlorides and blends thereof.

Polyvinyl chloride (PVC) based TPE:s are also suitable for window seals and are available in different grades and blends with other TPE:s and rubbers. Thermoplastic vulcanizates (TPV) with a relatively softer grade can be extruded to make profiles and seals. Thermoplastic vulcanizates comprises thermoplastic matrices, preferably crystalline, through which thermoset elastomers are generally uniformly distributed. Examples of thermoplastic vulcanizates include ethylene-propylene monomer rubber and ethylene-propylene-diene monomer rubber thermoset materials distributed in a crystalline polypropylene matrix. One example of a commercial TPV is Satoprene® thermoplastic rubber which is manufactured by Advanced Elastomer Systems and is a mixture of crosslinked EPDM particles in a crystalline polypropylene matrix. These materials have found utility in many applications which previously used vulcanized rubber, e.g., hoses, gaskets, and the like. Commercial TPV:s are typically based on vulcanized rubbers in which a phenolic resin or sulfur cure system is used to vulcanize, that is to crosslink, a diene (or more generally, a polyene) copolymer rubber by way of dynamic vulcanization, that is crosslinking while mixing (typically vigorously), in a thermoplastic matrix. TPV:s typically include a rubber component, a thermoplastic component, additive oil and other ingredients such as curing additives and the like. A variety of properties of TPVs are considered to be important, including but not limited to rebound, tensile strength and elongation, as well as varying degrees of softness or hardness.

The glass contacting sealing lips of the header glass run channel can include a low friction surface which may be comprised of any suitable low friction material such as silicone, polyurethane, low friction flocking, or polypropylene.

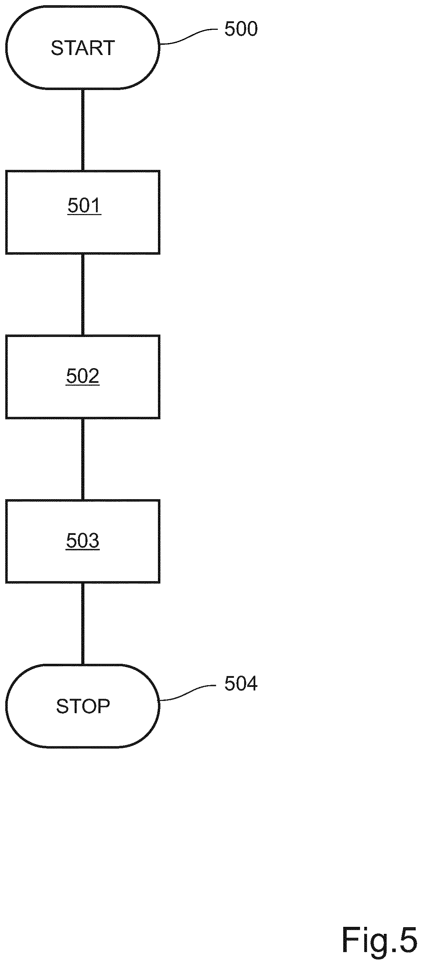

Figure 5 shows a schematic diagram for a method of manufacturing a glass run seal assembly according to the invention. The method involves performing a number of process steps in sequence once the process is started 500. A first step 501 involves extruding an elastomeric material forming individual first and second legs 411, 412 for a first portion 410 intended to form a glass run channel 410. The first step 501 involves simultaneous extrusion of a thermoplastic material forming a second portion 420 having a generally U-shaped cross section defining an attachment channel 420, the second portion 420 having first and second legs 421, 422 with edges joined by a base web 423, and a further base web 413 bonding with the extruded elastomeric material of the first and second legs 411, 412 of the first portion 410 to form a generally U-shaped cross section defining the glass run channel 410, the further base web 413 being integral with an edge 424 of the first leg 421 of the second portion 410.

A second step 502 is performed during the simultaneous co-extrusion of the glass run channel 410 and the attachment channel 420. The second step 502 involves inserting a reinforcement 430 into the second leg 422 of the second portion 420 in at least one predetermined section L (Figure 2) during extrusion of the thermoplastic material, wherein the co-extruded materials form a glass run seal assembly 401.

A third step 503 is performed after the first and second steps 501, 502. The third step 503 involves cooling the extruded glass run seal assembly 401 and allowing the first leg 421 of the second portion 420 and the extruded first and second legs 411, 412 of the first portion 410 to shrink in the longitudinal direction relative to the reinforced second leg 422 of the second portion 420. As the section L (Figure 2) of the second leg 422 of the second portion 420 comprising the reinforcement 430 has a lower coefficient of thermal expansion than the remaining a glass run seal assembly 401, the glass run seal assembly 401 will bend during cooling to assume predetermined curvature. Once the glass run seal assembly 401 has cooled to ambient temperature, the process ends 504.

The method involves inserting the reinforcement 430 so that a cross-section through the reinforcement 430 has a major extension in a plane X₃ located at right angles to a first plane X₁ in the main direction of the U-shaped opening 418 into the glass run channel 410. In addition insertion of the reinforcement 430 can be performed so that the first plane X₁ of the U-shaped opening 418 into the glass run channel 410 is arranged to intersect the reinforcement 430.

The method preferably involves using a reinforcement comprising at least one metal strip. Alternative types of reinforcements to be inserted during the second step 502 have been listed above.

As described above, the reinforcement 430 is inserted into the second leg 422 of the second portion 420 at predetermined locations during extrusion of the glass run seal assembly 401. In this way the reinforcement 430 is arranged to extend within at least one longitudinal section L of the second leg 422 where the glass run seal assembly 401 will require a curvature following the shape of a vehicle window aperture (Figure 1 & 2). The reinforcing insert 430 is located within a section L of the glass run seal assembly 401 comprising a thermoplastic polymeric structural material, such as structural polypropylene (PP). The glass run seal assembly 401 is hot and malleable after the extrusion process. During cooling the reinforcement/insert 430 prevents the thermoplastic polymeric structural material in the second leg 422 of the second portion from shrinking. At the same time, the thermoplastic polymeric structural material in the first leg 421 of the second portion 420 and the elastomeric material in the remaining sections and seals are allowed to shrink during cooling. As the second leg 422 of the second portion 420 with the reinforcement 430 has a lower coefficient of thermal expansion than the first leg 421 of the second portion 420 the glass run seal assembly 401 will bend to form a curvature without wrinkles. The glass run seal assembly 401 will bend in a plane XY located at right angles to a plane X₃ in the major extension of a cross-section through the reinforcement 430.

According to a preferred example, the invention relates to a glass run seal assembly 401 comprising a metal insert, such as an aluminium strip, that prevents the assembly from wrinkling during cooling and subsequent mounting onto a curved section the window opening of a vehicle door.

The above process steps only describe the basic structural sections of a glass run seal assembly according to the invention, which sections comprise an attachment channel with a reinforcement and a glass run channel. However, the extrusion process can involve additional component parts being co-extruded with their respective basic structural section. Examples of such additional component parts are sealing lips.

During the extrusion process the a glass run channel 410 can be provided with sealing lips 414, 415, 416, 417 extending into the generally U-shaped cross section, in order to contact and seal a portion along the upper part of a glass pane. Similarly, the attachment channel 420 can be provided with sealing lips 425, 426 extending away from its generally U-shaped cross section, in order to contact the vehicle chassis and seal a gap between an upper portion of the door and a corresponding section forming the upper portion of a door opening. Sealing lips of this type can be made from an elastomeric material of the same type used for the first and second legs for the first portion of the glass run channel. However, as the sealing lips 414, 415, 416, 417, 425, 426 need to be able to be deformed to conform to cooperating surfaces, the elastomeric material used is preferably a softer grade than used for the glass run channel.

The invention is not limited to the above examples, but may be varied within the scope of the invention as defined by the appended claims. For instance, the relative positions of the glass run channel 410 and the attachment channel 420, as well as the location and number of sealing lips, is not limited to the examples given in the text above.

## Claims

1. A method for manufacturing a glass run seal assembly, **characterized by**, performing the steps of:
- extruding (501) an elastomeric material forming individual first and second legs (411, 412) for a first portion (410) intended to form a glass run channel;
- simultaneously extruding (501) a thermoplastic material forming a second portion (420) having a generally U-shaped cross section defining an attachment channel, the second portion having first and second legs (421, 422) with edges joined by a base web (423), and a further base web (413) bonding with the extruded elastomeric material of the first and second legs (411, 412) of the first portion (410) to form a generally U-shaped cross section defining the glass run channel, the further base web (413) being integral with an edge (424) of the first leg (421) of the second portion (420);
- inserting (502) a reinforcement (430) into the second leg (422) of the second portion (420) during extrusion of the thermoplastic material, wherein the co-extruded materials form a glass run seal assembly; and
- cooling (503) the glass run seal assembly and allowing the first leg (421) of the second portion (420) and the extruded first and second legs (411, 412) of the first portion (410) to shrink in the longitudinal direction relative to the reinforced second leg (422) of the second portion (420), forming a glass run seal assembly having a predetermined curvature in the longitudinal direction of the glass run assembly imparted by the reinforcement (430) in the second leg (422).

2. Method according to claim 1, **characterized by** inserting the reinforcement (430) so that a cross-section through the metal core has a major extension in a plane located at right angles to the main direction of the U-shaped opening into the glass run channel.

3. Method according to claim 1 or 2, **characterized by** inserting the reinforcement so that the central axis of the U-shaped opening into the glass run channel is arranged to intersect the reinforcement (430).

4. Method according to any one of claims 1-3, **characterized by** using a reinforcement (430) comprising at least one metal strip.

5. Method according to any one of claims 1-4, **characterized by** locating the reinforcement (430) to extend within at least one longitudinal section (L) of the second leg (422) where the glass run seal assembly has a curvature.

6. A glass run seal assembly (201; 301; 401) for a movable pane in a vehicle window aperture (105, 106), the glass run seal assembly comprising:
- a first portion (410) having a generally U-shaped cross section defining a glass run channel having first and second legs (411, 412) with edges joined by a first base web (413), wherein at least the legs (411, 412) of the first portion (410) comprises elastomeric extrusions bonded to the base web (413); and
- a second portion (420) having a generally U-shaped cross section defining an attachment channel having first and second legs (421, 422) with edges joined by a second base web (423), wherein the legs (421, 422) and base web (423) of the second portion (420) comprises a thermoplastic polymeric structural material, **characterized in that**
the glass run seal assembly (201; 301; 401) is manufactured by the method according to any one of claims 1-5, wherein the first leg (421) of the second portion (420) has an edge remote from its base web (423), which edge is integral the base web (413) of the first portion (410), and the second leg (422) of the second portion (420) comprises a reinforcement (430) extending within the second leg (422) in the longitudinal extension thereof to impart a predetermined curvature to the glass run seal assembly (401) in its longitudinal direction and to provide structural support for at least one curved section.

7. A glass run seal assembly according to claim 6, **characterized in that** the second leg (422) of the second portion (420) with the reinforcement (430) has a lower coefficient of thermal expansion than the first leg (421) of the second portion (420).

8. A glass run seal assembly according to claim 6 or 7, **characterized in that** a cross-section through the reinforcement (430) has a major extension in a plane (X₃) located at right angles to the main direction (X₁) of the U-shaped opening (418) into the glass run channel (410).

9. A glass run seal assembly according to any one of the above claims, **characterized in that** the central axis of the U-shaped opening into the glass run channel is arranged to intersect the reinforcement (430).

10. A glass run seal assembly according to any one of the above claims, **characterized in that** the reinforcement (430) comprises a metal core.

11. A glass run seal assembly according to claim 7 or 8, **characterized in that** the reinforcement (430) comprises at least one metal strip.

12. A glass run seal assembly according to claim 10 or 11, **characterized in that** the metal core comprises copper, aluminium or an aluminium alloy.

13. A glass run seal assembly according to any one of the above claims, **characterized in that** the second portion (420) and the base web (413) of the first portion (410) comprise a structural grade polypropylene.

14. A glass run seal assembly according to any one of the above claims, **characterized in that** the first and second legs (411, 412) of the first portion (410) comprise thermoplastic vulcanizates.

15. A glass run seal assembly according to any one of the above claims, **characterized in that** a reinforcement (430) is arranged to extend within at least one longitudinal section (L) of the second leg (422) where the glass run seal assembly has a curvature.

## Patentansprüche

1. Verfahren zum Herstellen einer Fensterführungsdichtungsanordnung, **gekennzeichnet durch** die Durchführung der folgenden Schritte:
- Extrudieren (501) eines elastomeren Materials, das individuell einen ersten und einen zweiten Schenkel (411, 412) für einen ersten Abschnitt (410) bildet, der zum Bilden eines Fensterführungskanals vorgesehen ist,
- gleichzeitiges Extrudieren (501) eines thermoplastischen Materials, das einen zweiten Abschnitt (420) bildet, der einen allgemein U-förmigen Querschnitt aufweist, der einen Befestigungskanal definiert, wobei der zweite Abschnitt einen ersten und einen zweiten Schenkel (421, 422) mit Rändern aufweist, die durch einen Bodensteg (423) zusammengefügt sind, und ein weiterer Bodensteg (413) eine Verbindung mit dem extrudierten elastomeren Material des ersten und zweiten Schenkels (411, 412) des ersten Abschnitts (410) herstellt, um einen allgemein U-förmigen Querschnitt zu bilden, der den Fensterführungskanal definiert, wobei der weitere Bodensteg (413) integral mit einem Rand (424) des ersten Schenkels (421) des zweiten Abschnitts (420) ausgebildet ist,
- Einsetzen (502) einer Verstärkung (430) in den zweiten Schenkel (422) des zweiten Abschnitts (420) während der Extrusion des thermoplastischen Materials, wobei die zusammen extrudierten Materialien eine Fensterführungsdichtungsanordnung bilden, und
- Abkühlen (503) der Fensterführungsdichtungsanordnung und Gestatten einer Schrumpfung des ersten Schenkels (421) des zweiten Abschnitts (420) und des extrudierten ersten und zweiten Schenkels (411, 412) des ersten Abschnitts (410) in Längsrichtung relativ zu dem verstärkten zweiten Schenkel (422) des zweiten Abschnitts (420), wodurch eine Fensterführungsdichtungsanordnung gebildet wird, die in Längsrichtung der Fensterführungsanordnung eine durch die Verstärkung (430) im zweiten Schenkel (422) verliehene vorab bestimmte Krümmung aufweist.

2. Verfahren nach Anspruch 1, **gekennzeichnet durch** ein Einsetzen der Verstärkung (430) so, dass ein Querschnitt durch den Metallkern eine Haupterstreckung in einer Ebene aufweist, die im rechten Winkel zur Hauptrichtung der U-förmigen Öffnung in den Fensterführungskanal liegt.

3. Verfahren nach Anspruch 1 oder 2, **gekennzeichnet durch** ein Einsetzen der Verstärkung so, dass die Mittelachse der U-förmigen Öffnung in den Fensterführungskanal so angeordnet ist, dass sie die Verstärkung (430) schneidet.

4. Verfahren nach einem der Ansprüche 1 bis 3, **gekennzeichnet durch** ein Verwenden einer Verstärkung (430), die mindestens einen Metallstreifen umfasst.

5. Verfahren nach einem der Ansprüche 1 bis 4, **gekennzeichnet durch** ein Platzieren der Verstärkung (430) so, dass sie sich innerhalb mindestens eines Längsteilstücks (L) des zweiten Schenkels (422) erstreckt, in welchem die Fensterführungsdichtungsanordnung eine Krümmung aufweist.

6. Fensterführungsdichtungsanordnung (201; 301; 401) für eine bewegliche Scheibe in einer Fahrzeugfensteröffnung (105, 106), wobei die Fensterführungsdichtungsanordnung Folgendes umfasst:
- einen ersten Abschnitt (410), der einen allgemein U-förmigen Querschnitt aufweist, der einen Fensterführungskanal mit einem ersten und einem zweiten Schenkel (411, 412) mit Rändern definiert, die durch einen ersten Bodensteg (413) zusammengefügt sind, wobei zumindest die Schenkel (411, 412) des ersten Abschnitts (410) mit dem Bodensteg (413) verbundene elastomere Extrusionsteile umfassen, und
- einen zweiten Abschnitt (420), der einen allgemein U-förmigen Querschnitt aufweist, der einen Befestigungskanal mit einem ersten und einem zweiten Schenkel (421, 422) mit Rändern definiert, die durch einen zweiten Bodensteg (423) zusammengefügt sind, wobei die Schenkel (421, 422) und der Bodensteg (423) des zweiten Abschnitts (420) ein thermoplastisches polymeres Strukturmaterial umfassen, **dadurch gekennzeichnet, dass** die Fensterführungsdichtungsanordnung (201; 301; 401) durch das Verfahren nach einem der Ansprüche 1 bis 5 hergestellt ist, wobei der erste Schenkel (421) des zweiten Abschnitts (420) einen von dessen Bodensteg (423) entfernt liegenden Rand aufweist, wobei der Rand integral mit dem Bodensteg (413) des ersten Abschnitts (410) ausgebildet ist, und der zweite Schenkel (422) des zweiten Abschnitts (420) eine Verstärkung (430) umfasst, die sich innerhalb des zweiten Schenkels (422) in dessen Längserstreckung so erstreckt, dass sie der Fensterführungsdichtungsanordnung (401) in deren Längsrichtung eine vorab bestimmte Krümmung verleiht und mindestens ein gekrümmtes Teilstück strukturell stützt.

7. Fensterführungsdichtungsanordnung nach Anspruch 6, **dadurch gekennzeichnet, dass** der zweite Schenkel (422) des zweiten Abschnitts (420) mit der Verstärkung (430) einen niedrigeren Wärmeausdehnungskoeffizienten aufweist als der erste Schenkel (421) des zweiten Abschnitts (420).

8. Fensterführungsdichtungsanordnung nach Anspruch 6 oder 7, **dadurch gekennzeichnet, dass** ein Querschnitt durch die Verstärkung (430) eine Haupterstreckung in einer Ebene (X₃) aufweist, die im rechten Winkel zur Hauptrichtung (X₁) der U-förmigen Öffnung (418) in den Fensterführungskanal (410) liegt.

9. Fensterführungsdichtungsanordnung nach einem der vorhergehenden Ansprüche, **dadurch gekennzeichnet, dass** die Mittelachse der U-förmigen Öffnung in den Fensterführungskanal so angeordnet ist, dass sie die Verstärkung (430) schneidet.

10. Fensterführungsdichtungsanordnung nach einem der vorhergehenden Ansprüche, **dadurch gekennzeichnet, dass** die Verstärkung (430) einen Metallkern umfasst.

11. Fensterführungsdichtungsanordnung nach Anspruch 7 oder 8, **dadurch gekennzeichnet, dass** die Verstärkung (430) mindestens einen Metallstreifen umfasst.

12. Fensterführungsdichtungsanordnung nach Anspruch 10 oder 11, **dadurch gekennzeichnet, dass** der Metallkern Kupfer, Aluminium oder eine Aluminiumlegierung umfasst.

13. Fensterführungsdichtungsanordnung nach einem der vorhergehenden Ansprüche, **dadurch gekennzeichnet, dass** der zweite Abschnitt (420) und der Bodensteg (413) des ersten Abschnitts (410) ein tragfestes Polypropylen umfassen.

14. Fensterführungsdichtungsanordnung nach einem der vorhergehenden Ansprüche, **dadurch gekennzeichnet, dass** der erste und der zweite Schenkel (411, 412) des ersten Abschnitts (410) thermoplastische Vulkanisate umfassen.

15. Fensterführungsdichtungsanordnung nach einem der vorhergehenden Ansprüche, **dadurch gekennzeichnet, dass** eine Verstärkung (430) so angeordnet ist, dass sie sich innerhalb mindestens eines Längsteilstücks (L) des zweiten Schenkels (422) erstreckt, in welchem die Fensterführungsdichtungsanordnung eine Krümmung aufweist.

## Revendications

1. Procédé pour fabriquer un ensemble joint d'étanchéité de coulisse de vitre, **caractérisé en ce qu'**il consiste à réaliser les étapes consistant :
- à extruder (501) un matériau élastomère formant des première et seconde pattes (411, 412) individuelles pour une première partie (410) destinée à former un canal de coulisse de vitre ;
- à extruder (501) en même temps un matériau thermoplastique formant une seconde partie (420) ayant une section transversale généralement en forme de U définissant un canal de fixation, la seconde partie ayant des première et seconde pattes (421, 422) ayant des bords unis par un tissu de base (423) et un tissu de base supplémentaire (413) relié au matériau élastomère extrudé des première et seconde pattes (411, 412) de la première partie (410) pour former une section transversale généralement en forme de U définissant le canal de coulisse de vitre, le tissu de base supplémentaire (413) étant formé d'une seule pièce avec un bord (424) de la première patte (421) de la seconde partie (420) ;
- à insérer (502) un renfort (430) dans la seconde patte (422) de la seconde partie (420) pendant l'extrusion du matériau thermoplastique, dans lequel les matériaux coextrudés forment un ensemble joint d'étanchéité de coulisse de vitre ; et
- à refroidir (503) l'ensemble joint d'étanchéité de coulisse de vitre et à permettre à la première patte (421) de la seconde partie (420) et aux première et seconde pattes (411, 412) extrudées de la première partie (410) de se rétrécir dans la direction longitudinale par rapport à la seconde patte (422) renforcée de la seconde partie (420), formant un ensemble joint d'étanchéité de coulisse de vitre ayant une courbure prédéterminée dans la direction longitudinale de l'ensemble coulisse de vitre transmise par le renfort (430) dans la seconde patte (422).

2. Procédé selon la revendication 1, **caractérisé en ce qu'**il consiste à insérer le renfort (430) de telle sorte qu'une section transversale à travers le noyau métallique comporte une extension majeure dans un plan situé à angle droit par rapport à la direction principale de l'ouverture en forme de U dans le canal de coulisse de vitre.

3. Procédé selon la revendication 1 ou 2, **caractérisé en ce qu'**il consiste à insérer le renfort de telle sorte que l'axe central de l'ouverture en forme de U dans le canal de coulisse de vitre soit conçu pour couper le renfort (430).

4. Procédé selon l'une quelconque des revendications 1 à 3, **caractérisé en ce qu'**il consiste à utiliser un renfort (430) comprenant au moins une bande métallique.

5. Procédé selon l'une quelconque des revendications 1 à 4, **caractérisé en ce qu'**il consiste à situer le renfort (430) de sorte à s'étendre à l'intérieur d'au moins une section longitudinale (L) de la seconde patte (422) où l'ensemble joint d'étanchéité de coulisse de vitre présente une courbure.

6. Ensemble joint d'étanchéité de coulisse de vitre (201 ; 301 ; 401) pour une vitre mobile dans une ouverture de fenêtre de véhicule (105, 106), l'ensemble joint d'étanchéité de coulisse de vitre comprenant :
- une première partie (410) ayant une section transversale généralement en forme de U définissant un canal de coulisse de vitre ayant des première et seconde pattes (411, 412) ayant des bords unis par un premier tissu de base (413), dans lequel au moins les pattes (411, 412) de la première partie (410) comprennent des extrusions élastomères reliées au tissu de base (413) ; et
- une seconde partie (420) ayant une section transversale généralement en forme de U définissant un canal de fixation ayant des première et seconde pattes (421, 422) ayant des bords unis par un second tissu de base (423), dans lequel les pattes (421, 422) et le tissu de base (423) de la seconde partie (420) comprennent un matériau structurel polymère thermoplastique, **caractérisé en ce que**
l'ensemble joint d'étanchéité de coulisse de vitre (201 ; 301 ; 401) est fabriqué par le procédé selon l'une quelconque des revendications 1 à 5, dans lequel la première patte (421) de la seconde partie (420) comporte un bord distant de son tissu de base (423), lequel bord est formé d'une seule pièce avec le tissu de base (413) de la première partie (410), et la seconde patte (422) de la seconde partie (420) comprend un renfort (430) s'étendant à l'intérieur de la seconde patte (422) dans l'extension longitudinale de cette dernière pour transmettre une courbure prédéterminée à l'ensemble joint d'étanchéité de coulisse de vitre (401) dans sa direction longitudinale et pour fournir un support structurel à au moins une section incurvée.

7. Ensemble joint d'étanchéité de coulisse de vitre selon la revendication 6, **caractérisé en ce que** la seconde patte (422) de la seconde partie (420) ayant le renfort (430) présente un coefficient de dilatation thermique plus faible que celui de la première patte (421) de la seconde partie (420).

8. Ensemble joint d'étanchéité de coulisse de vitre selon la revendication 6 ou 7, **caractérisé en ce qu'**une section transversale à travers le renfort (430) comporte une extension majeure dans un plan (X₃) situé à angle droit par rapport à la direction principale (X₁) de l'ouverture en forme de U (418) dans le canal de coulisse de vitre (410).

9. Ensemble joint d'étanchéité de coulisse de vitre selon l'une quelconque des revendications précédentes, **caractérisé en ce que** l'axe central de l'ouverture en forme de U dans le canal de coulisse de vitre est conçu pour couper le renfort (430).

10. Ensemble joint d'étanchéité de coulisse de vitre selon l'une quelconque des revendications précédentes, **caractérisé en ce que** le renfort (430) comprend un noyau métallique.

11. Ensemble joint d'étanchéité de coulisse de vitre selon la revendication 7 ou 8, **caractérisé en ce que** le renfort (430) comprend au moins une bande métallique.

12. Ensemble joint d'étanchéité de coulisse de vitre selon la revendication 10 ou 11, **caractérisé en ce que** le noyau métallique comprend du cuivre, de l'aluminium ou un alliage d'aluminium.

13. Ensemble joint d'étanchéité de coulisse de vitre selon l'une quelconque des revendications précédentes, **caractérisé en ce que** la seconde partie (420) et le tissu de base (413) de la première partie (410) comprennent un polypropylène de grade structurel.

14. Ensemble joint d'étanchéité de coulisse de vitre selon l'une quelconque des revendications précédentes, **caractérisé en ce que** les première et seconde pattes (411, 412) de la première partie (410) comprennent des vulcanisats thermoplastiques.

15. Ensemble joint d'étanchéité de coulisse de vitre selon l'une quelconque des revendications précédentes, **caractérisé en ce qu'**un renfort (430) est conçu pour s'étendre à l'intérieur d'au moins une section longitudinale (L) de la seconde patte (422) où l'ensemble joint d'étanchéité de coulisse de vitre présente une courbure.
